# EUROPÄISCHE PATENTSCHRIFT

(11) **EP 1 518 455 B1**
(45) Veröffentlichungstag und Bekanntmachung des Hinweises auf die Patenterteilung: **13.12.2006**
(21) Anmeldenummer: 04022764.7
(22) Anmeldetag: 24.09.2004
(51) Int. Cl.: A01F 15/07, A01F 15/18

(54) **Rundballenpresse**
Rotobaler
Presse à balles rondes

(30) Priorität: 27.09.2003 DE 10345031
(43) Veröffentlichungstag der Anmeldung: 30.03.2005
(73) Patentinhaber: Welger Maschinenfabrik GmbH, D-38304 Wolfenbüttel (DE)
(72) Erfinder: Rodewald, Peter, 38321 Neindorf (DE)

(56) Entgegenhaltungen:
- EP-A- 0 095 690
- EP-A- 0 150 630
- EP-A- 0 510 499
- EP-A- 0 745 319
- EP-A- 1 269 827
- DE-A- 19 851 470

## Beschreibung

Die Erfindung betrifft eine Rundballenpresse nach dem Oberbegriff des Patentanspruches 1.

Rundballenpressen mit Riemen als Förder- und Presseinrichtung haben sich im praktischen Einsatz erfolgreich bewährt, jedoch treten bei extremen Erntegütern noch folgende Probleme auf, die trotz zahlreicher Entwicklungsarbeiten bisher nicht zufriedenstellend gelöst sind:
a.) bei sehr trockenem, spröden Gerstenstroh sammeln sich Materialteilchen in dem Zwischenraum an, der von den dem Ballen zugewandten und den dem Ballen abgewandten Riemenabschnitten im Bereich oberhalb der in Ballendrehrichtung gesehen letzten Umlenkrolle (Führungs- und Antriebswalze) gebildet wird. Diese Materialansammlungen werden einerseits teilweise je nach Größe durch die Spalte zwischen den Riemen und andererseits im Bereich der Seitenwände nach außen gefördert, können dabei jedoch die Netzannahme beim Umwickelbeginn des Ballens behindern. Darüber hinaus besteht der Nachteil, dass Material zwischen Riemen und Umlenkrolle mitgenommen wird und den Riemenlauf negativ beeinflusst.
b.) bei feuchten Erntegütern, insbesondere bei bestimmten Anwelkgraden von feuchtem Gras, wickelt das Material um die Umlenkwalze und gegebenenfalls um eine ihre zugeordnete Abstreiferwalze. Daraus können Blockierungen der Abstreiferwalze und/oder der Umlenkrolle resultieren.

Die Erfindung geht aus von einer Rundballenpresse gemäß EP 0095690. Hierbei weisen bei wenigstens einer die Riemen führenden Walze die Seitenkanten der Riemen im Umlaufbereich um die Walze einen Abstand zur Walzenoberfläche auf. Auf diese Weise wird weitgehend vermieden, dass das Erntegut zwischen Riemen und Walze festgeklemmt und mitgedreht wird und sich in den Zwischenräumen ansammelt. Nachteilig ist jedoch, dass sich bestimmte Erntegüter trotzdem um die Walze wickeln und zu den bekannten Riemenlaufproblemen und Gutansammlungen in den Zwischenräumen führen.

Die EP 0510499 A1 zeigt eine Vorrichtung zum Verhindern eines Materialaufbaues an einer glatten Umlenkwalze. Diese Vorrichtung besteht aus einer in unmittelbarer Nähe der Umlenkwalze angeordneten Schnecke, die das Material von der Umlenkwalze abtrennt. Problematisch ist jedoch das Wegfördern des abgetrennten Materials, insbesondere wenn zwei benachbarte Riemen nicht wie bei EP 0510499 A1 versetzt sind. Darüber hinaus ist der konstruktive Aufwand hoch, weil die Schneckenwalze nicht vom Riemen direkt angetrieben werden kann. Ein weiterer Nachteil ist der relativ große Bauraumbedarf.

Weitere Vorrichtungen zeigen die EP 0745319 A1 und die EP 0510499 B1. Hierbei soll wenigstens eine der zusammenwirkenden Walzen ein auf dem Umfang nach außen hervorstehendes Element aufweisen, das weitgehend mit dem Außenumfang der anderen Walze in Kontakt ist, um das Material zu zerreißen, zu schneiden oder zu ziehen, damit es daran gehindert wird, sich um eine oder beide Walzen zu wickeln. In einer Ausführungsform ist auf einer Walze eine Förderschnecke angeordnet, die mit beabstandeten Längsrippen oder durchgehenden Längsrippen auf der anderen Walze zusammenwirken soll. In einer anderen Ausführungsform weist jede Walze sich in axialer Richtung erstreckende Längsrippen auf. Der Antrieb der zweiten Walze soll durch Riemenkontakt erfolgen.

Diese Einrichtung weist folgende Nachteile auf:

Im Falle einer Förderschnecke streift diese Material zwar von der anderen Walze ab, fördert es aber in Richtung Seitenwände, wo es zu Anhäufungen kommt, die den Riemenlauf stören. Da die Förderschnecke in Kontakt mit dem Riemen ist, kann es zu Riemenbeschädigungen kommen, insbesondere beim Blockieren der zur Riemenumlenkrolle benachbarten Walze, die aufgrund der geringen Riemenumschlingung schon bei kleinen Widerständen blockiert. Riemenbeschädigungen können insbesondere dann auftreten, wenn auch die Umlenkrolle selbst auf dem Umfang nach außen vorstehende Elemente, insbesondere Förderschnecken oder Stege aufweist. Sind auf beiden Walzen Rippen angeordnet, so muss entweder ein genügender Abstand der Walzen gegeben sein, damit die einander gegenüberliegenden Rippen nicht kollidieren oder durch formschlüssigen Antrieb (Zahnräder, Ketten) Synchronlauf der Walzen gewährleistet sein. Von großem Nachteil ist, dass sich im Bereich der Lücken zwischen hervorstehenden Elementen Material um die Walzen wickeln bzw. an den Walzen anhaften kann und zu den bekannten Störungen führt. Da die hervorstehenden Elemente den Hüllkreisdurchmesser vergrößern, weisen die Walzen selbst einen kleineren Durchmesser auf, der an sich eine größere Tendenz zum Wickeln von Material hat.

Durch die EP-A1-0150630 ist eine Rundballenpresse mit Riemen bekannt, die oberhalb der Aufsammeleinrichtung (Pick-up) eine unterhalb der Umlenkrolle des vorderen Riemensegmentes angeordnete Ballenstartwalze aufweist. Die Ballenstartwalze hat einen viereckigen Querschnitt. Damit sich kein Material um die Ballenstartwalze wickelt, wird ein beweglicher, gesteuerter Abstreifer vorgeschlagen, der der Kontur der umlaufenden Ballenstartwalze folgt und das Material abstreifen soll. Abgesehen von der komplizierten Konstruktion ist diese Einrichtung nicht geeignet zur Sauberhaltung von Riemenumlenkrollen oder der von Riemen gebildeten Zwischenräume.

Der Erfindung liegt die Aufgabe zugrunde, die eingangs beschriebene Rundballenpresse so zu verbessern, dass vorgenannte Nachteile vermieden werden und es soll eine zuverlässige Lösung entwickelt werden zur Sauberhaltung der Walzen und des von Riemen gebildeten Zwischenraumes.

Ausgehend von der gemäß EP 0095960 wird diese Aufgabe dadurch gelöst, dass der wenigstens einen Walze eine umlaufende Abstreifeinrichtung zugeordnet ist, welche in dem Bereich zwischen den Seitenkanten benachbarter Riemen eine größere Querschnittsabmessung aufweist als im Mittenbereich der Riemen. Hinsichtlich der weiteren Ausgestaltung der Erfindung wird auf die Ansprüche 2 bis 10 verwiesen.

Die erfindungsgemäße Gestaltung der Walzen ergibt folgende Vorteile:
- Die einander gegenüberliegenden Walzenabschnitte streifen sich während der Drehung gegenseitig ab, so dass sich kein Material auf den Walzen aufbauen und den Durchmesser vergrößern kann.
- Die erfindungsgemäße Walze läuft auf dem Walzenbereich mit großem Durchmesser mit der Umfangsgeschwindigkeit des Riemens um. Da sich der Mittenbereich des Riemens in den Bereich mit kleinerem Durchmesser durchbiegt, der eine kleinere Umfangsgeschwindigkeit als der Riemen hat, scheuert der Riemen in seinem Umlaufbereich an dem Walzenumfang und hält diesen sauber.

Eine günstige Ausbildung besteht darin, dass beide Walzen im Wechsel zylindrische und polygone Querschnittsbereiche aufweisen, wobei jeweils der zylindrische Querschnittsbereich der einen Walze mit dem polygonen Querschnittsbereich der anderen Walze zusammenwirkt. Hierdurch weisen beide Walzen sowohl Abstreiferelemente als auch Riemenführungsabschnitte auf, halten sich dadurch gegenseitig sauber und zerkleinern gegenseitig das Material.

Eine besonders vorteilhafte Ausgestaltung der Walzen wird dadurch erzielt, dass ein zylindrischer Querschnittsbereich der einen Walze in die axialen, von zwei zylindrischen Querschnittsbereichen der anderen Walze begrenzten Zwischenräume eingreift. Dadurch üben die sich gegenseitig überdeckenden Seitenkanten der zylindrischen Walzen zusätzlich eine Schneidwirkung auf das Material aus. Darüber hinaus weisen die zylindrischen Querschnittsbereiche einen größeren Durchmesser auf, weil diese Bereiche sich gegenseitig in einem Abstand überdecken. Die Wickelgefahr ist somit an sich schon geringer.

In der Zeichnung sind drei Ausführungsbeispiele dargestellt. Hierbei zeigen
- Fig. 1:: eine Rundballenpresse in Seitenansicht mit erfindungsgemäßen Walzen im vorderen Pressraumgehäuseteil und einem maximal ausgedehnt gezeichneten Ballenpressraum (maximaler Ballendurchmesser), wobei der Rundballen übersichtshalber nicht dargestellt ist,
- Fig.2:: eine Vorderansicht der Walzen von Figur 1 mit vier einzeln nebeneinander angeordneten Riemen;
- Fig.3:: eine vergrößerte Vorderansicht gemäß Figur 2 auf eine zweite Ausführungsform der Walzen und Seitenansicht in Blickrichtung des Pfeiles X.
- Fig.4:: eine vergrößerte Vorderansicht gemäß Figur 2 auf eine direkte Ausführungsform der Walzen.

Hinsichtlich des Aufbaues und der Wirkungsweise einer vorbekannten Rundballenpresse kann z.B. auf die deutsche Offenlegungsschrift Nr. 198 51 470.0 verwiesen werden.

Die Rundballenpresse besteht im Wesentlichen aus einem ausdehnbaren Ballenpressraum 1 zum Formen eines zylindrischen Ballens. Der Ballenpressraum 1 weist ein Paar sich gegenüberliegender Seitenwände 2 auf. An den Seitenwänden 2 sind mehrere Walzen 3, 4 drehbar montiert. Die Walzen 3, 4 erstrecken sich zwischen den Seitenwänden 2. Die Walzen 3, 4 tragen eine Vielzahl endloser, nebeneinander gelegener Riemen 5. Ein den Ballenpressraum 1 in radialer Richtung begrenzender Riemenabschnitt 22 erstreckt sich zwischen einer unteren Führungswalze 7 im vorderen Pressraumgehäuseteil und einer unteren Führungswalze 22a im hinteren Pressraumgehäuseteil. Auf der dem Ballenpressraum 1 abgewandten Seite laufen die Riemen 5 über die Walzen 3, 4 und über eine Riemenspannvorrichtung 9, die in bekannter Weise die Länge des Riemenabschnittes 6 an den sich beim Wickelvorgang vergrößernden Durchmesser des Ballens anpasst. In den dargestellten Ausführungsbeispielen ist der Ballenpressraum 1 in seiner maximalen Ausdehnung gezeichnet, d.h. bei maximalem Ballendurchmesser. Übersichtshalber wurde der Ballen jedoch zeichnerisch nicht dargestellt.

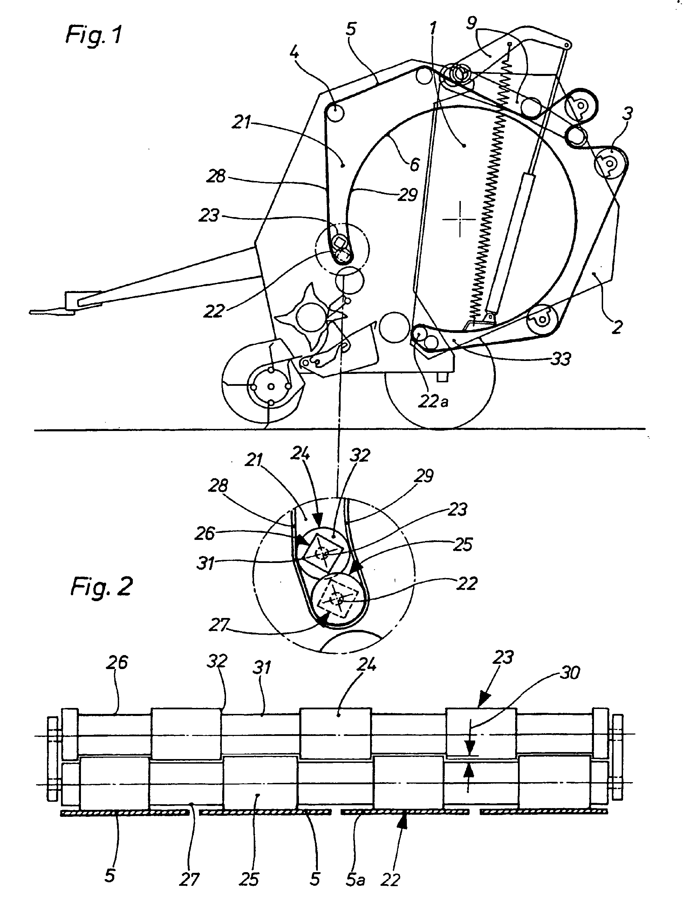

Wie aus Figur 1 ersichtlich, wird im vorderen Pressraumgehäuseteil ein V-förmiger Zwischenraum 21 gebildet von der unteren Führungswalze 22, einem dem Ballenpressraum 1 zugewandten Riemenabschnitt 29 und einem dem Ballenpressraum 1 abgewandten Riemenabschnitt 28. Beide Riemenabschnitte 28, 29 sind im wesentlichen emporgerichtet.

Neu sind die in dem Zwischenraum 21 angeordneten Walzen 22, 23, die beide im Wechsel jeweils zylindrische Walzenquerschnitte 24, 25 und viereckige Walzenquerschnitte 26, 27 aufweisen. Der Antrieb beider Walzen 22, 23 erfolgt durch Reibschluss durch die Riemenabschnitte 28, 29, so dass beide Walzen 22, 23 in gleicher Drehrichtung umlaufen. Der jeweils zylindrische Querschnittsbereich 24, 25 der einen Walze 22, 23 wirkt jeweils mit dem polygonen Querschnittsbereich 26, 27 der anderen Walze 23, 22 zusammen. Die zylindrischen Querschnittsbereiche 24, 25 haben einen größeren Durchmesser als die Hülldurchmesser der viereckigen Querschnittsbereiche 26, 27 und dienen der Riemenführung, während die viereckigen Querschnittsbereiche 26, 27 die zylindrischen Querschnittsbereiche 24, 25 abstreifen. Der Achsabstand beider Walzen 22, 23 und deren Durchmesser bzw. Hüllkreisdurchmesser sind so gewählt, dass sich einerseits die zylindrischen Querschnittsbereiche 24, 25 beider Walzen 22, 23 mit Abstand 30 überdecken und andererseits die radialen Kanten 31 der viereckigen Querschnittsbereiche 26, 27 einen sehr geringen Abstand (1-2 mm) zu der Oberfläche der zylindrischen Querschnittsbereiche 24, 25 einnehmen. Im gezeigten Ausführungsbeispiel ist die Anordnung so gewählt, dass die axiale Länge der zylindrischen Querschnittsbereiche 25 jeweils deutlich schmaler als die Breite der aufliegenden Riemen 5, 5a ist, wodurch die Riemen 5, 5a nur im Mittenbereich aufliegen und die Seitenkanten im Umlaufbereich der Walze diese nicht berühren. Die polygonen Querschnittsbereiche 26 der Walze 23 liegen jeweils im Mittenbereich der Riemen 5, 5a während die polygonen Querschnittsbereiche der Walze 22 im Bereich des Spalts zwischen zwei benachbarten Riemen 5, 5a angeordnet ist. Die besonderen Vorteile dieser Anordnung liegen darin, dass die zylindrischen Querschnittsbereiche 24, 25 einen wesentlich größeren Durchmesser aufweisen können, weil sie sich gegenseitig überdecken. Darüber hinaus reinigen sich beide Walzen 22, 23 gegenseitig und zerkleinern mit ihren viereckigen Querschnittsbereichen 26, 27 das Gut. Aufgrund der an sich schweren Bauweise reichen die aufgrund der Massenträgheit rotierender Walzen 22, 23 entstehenden Momente in Verbindung mit dem reibschlüssigen Riemenantrieb aus, um auch schwierigstes Material (klebriges nasses Gut) von den Walzen 22, 23 abzustreifen und zu zerkleinern, ohne dass eine oder beide Walzen 22, 23 stehen bleibt/en. Ein weiterer Vorteil dieser Anordnung besteht darin, dass die Seitenkanten 32 im Überschneidungsbereich der zylindrischen Querschnittsbereiche 24, 25 als zusätzliche Zerkleinerungselemente wirken. Hinsichtlich der Fertigung der Walzen 22, 23 besteht eine Möglichkeit in der axialen Aufreihung zylindrischer 24, 25 und eckiger Querschnittsbereiche 26, 27. Eine andere Möglichkeit ist das Aufstecken und Befestigen von Rohrabschnitten auf einer eckigen, durchgehenden Welle.

Die erfindungsgemäßen Walzen 23, 44, 49 können zusätzlich oder auch nur im Zwischenraum 33 des hinteren Pressraumgehäuseteiles angeordnet sein oder überall dort, wo zwei Riemenabschnitte einen Zwischenraum einschließen, in dem sich Material ansammeln und/oder um eine Riemenführungswalze wickeln kann.

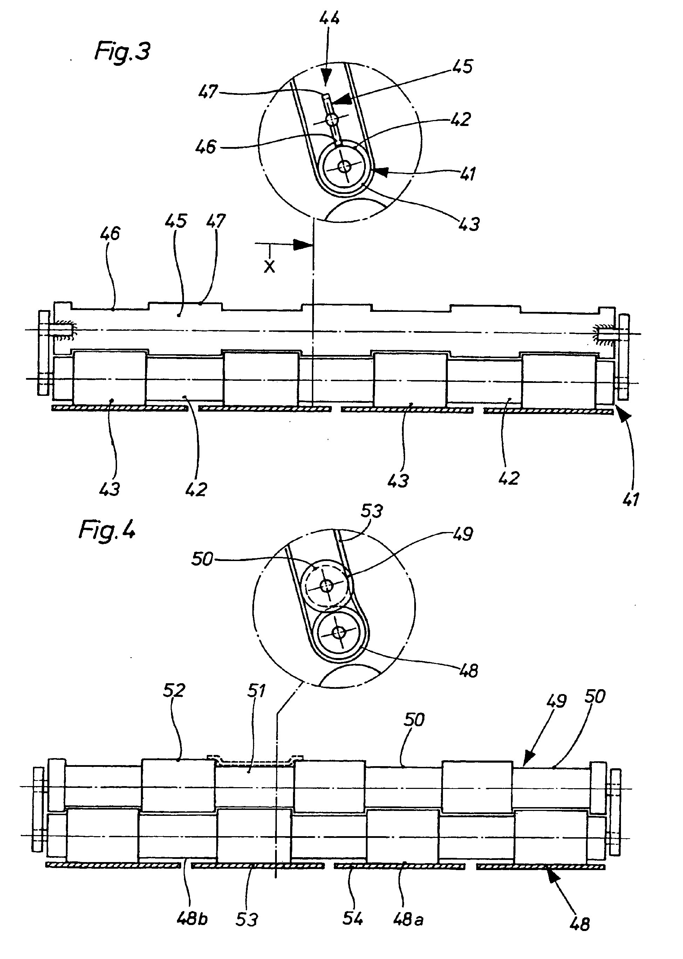

Eine weitere Ausführungsvariante ist in Figur 3 dargestellt. Hierbei besteht die untere Umlenkrolle 41 aus einem zylindrischen Kern (z.B. aus Stahlrohr) und Gummibüchsen 43, die auf die Mantelfläche des Kerns beispielsweise aufgeklebt sind. Hinsichtlich des Aufbaus und der Wirkungsweise einer vorbekannten Umlenkrolle 41 kann auf die EP 0095690 verwiesen werden. Neu ist eine oberhalb der Umlenkrolle 41 und parallel zu dieser in geringem Abstand angeordnete Abstreifeinrichtung 44. Die Abstreifeinrichtung 44 besteht aus einer Platte 45 mit rechteckförmigen Ausnehmung 46, in die die Büchsen 43 der Umlenkrolle 41 eingreifen, während der zylindrische Kern 42 mit der Außenkante 47 der Platte 45 zusammenwirkt. Die Abstreifeinrichtung 44 ist durch einen Fremdantrieb rotierend antreibbar und läuft vorzugsweise in der gleichen Drehrichtung um wie die Umlenkrolle 41, so dass die Ausnehmungen 46 und die Außenkanten 47 die Büchsen 43 und die Zylinderkerne 42 sauberhalten.

Die in Figur 4 gezeigte Ausführungsvariante unterscheidet sich von der in Figur 2 dargestellten Ausführungsform dadurch, dass sowohl die untere Umlenkrolle 48 als auch die obere Abstreiferrolle 49 statt der viereckigen Walzenquerschnitte gemäß Fig. 2 einen zylindrischen Walzenquerschnitt haben, wodurch die Fertigung vereinfacht und die Festigkeit der Umlenkrolle 48 und der Abstreiferrolle 49 erhöht wird. Beide Rollen 48,49 sind beispielsweise aus einem zylindrischen Stahlrohr 51 und aufgeklebten Gummibüchsen 52 hergestellt. Beide Rollen 48,49 können von den umlaufenden Riemen 53 in gleicher Drehrichtung angetrieben werden. Die Abstreiferrolle 49 kann aber auch Fremdantrieb aufweisen oder der Antrieb ist direkt abgeleitet von der Umlenkrolle 48. Vorzugsweise hat die Abstreiferrolle 49 einen kleineren Außendurchmesser als die Umlenkrolle 48, so dass die Abstreiferrolle 49 bei Antrieb durch den Riemen 53 mit größerer Umlaufgeschwindigkeit umläuft und dadurch eine höhere Abstreifwirkung auf die Umlenkrolle 48 hat. Entscheidend für die erfindungsgemäße Wirkung der Abstreiferrolle 49 ist der kleinere Durchmesser 50 dieser Rolle jeweils im Mittenbereich der Riemen 53,54, wodurch sich der jeweilige Mittenbereich durchbiegt, siehe gestrichelt gezeichneter Riemenquerschnitt in Figur 4. Dadurch weist der Bereich mit kleinerem Rollendurchmesser eine kleinere Umfangsgeschwindigkeit als der Riemen 53,54 auf, welches die Reinigung aufgrund der Relativbewegung bewirkt. Darüber hinaus streift der Bereich mit kleinerem Rollendurchmesser der Abstreiferrolle 49 den Bereich mit größerem Durchmesser der Umlenkrolle 48 ab, so dass sich Umlenkrolle 48 und Abstreiferrolle 49 auch sehr kritischen Erntegütern gegenseitig sauberhalten.

## Patentansprüche

1. Rundballenpresse mit einem Ballenpressraum (1), der aus mehreren einzeln nebeneinander angeordneten, über Walzen (22,22a,43,48) geführten endlosen Riemen (5,53) gebildet wird, welche beim Pressvorgang umlaufen, wobei mindestens eine der Walzen (22,22a,43,48) in ihrem den Mittenbereich der Riemen (5,53) führenden Bereich einen größeren Durchmesser aufweist als zwischen den Seitenkanten benachbarter Riemen, **dadurch gekennzeichnet, dass** der wenigstens einen Walze (22,22a,43,48) eine umlaufende Abstreifeinrichtung (23,44,49) zugeordnet ist, welche in dem Bereich zwischen den Seitenkanten benachbarter Riemen (5,5a,53,54) eine größere Querschnittsabmessung aufweist als im Mittenbereich der Riemen (5,5a,53,54).

2. Rundballenpressie nach Anspruch 1, **dadurch gekennzeichnet, dass** die Abstreifeinrichtung eine Walze (23) ist, in deren Längsrichtung abwechselnd zylindrische (24) und polygone (26) Querschnittsbereiche angeordnet sind, wobei die zylindrischen Querschnittsbereiche (24) der Walze (23) einen größeren Durchmesser aufweisen als die Hülldurchmesser der polygonen Querschnittsbereiche (26), welche im Mittenbereich der Riemen (5a) angeordnet sind und den Bereichen der Walze (22) mit dem größeren Durchmesser gegenüberliegen.

3. Rundballenpresse nach Anspruch 1 oder 2, **dadurch gekennzeichnet, dass** beide Walzen (22,23) im Wechsel zylindrische (25,24) und polygone Querschnittsbereiche (27,26) aufweisen, wobei jeweils der zylindrische (25,24) Querschnittsbereich der einen Walze (22,23) mit dem polygonen Querschnittsbereich (27,26) der anderen Walze (22,23) zusammenwirkt.

4. Rundballenpresse nach Anspruch 1, **dadurch gekennzeichnet, dass** beide Walzen (48,49) im Wechsel zylindrische Querschnittsbereiche mit größerem (48a,52) und kleinerem (48b,50) Durchmesser aufweisen, wobei jeweils die Bereiche (48a,52) mit dem größeren Durchmesser der einen Walze (48,49) den Bereichen (50,48b) mit dem kleineren Durchmesser der anderen Walze (49,48) gegenüberliegen.

5. Rundballenpresse nach Anspruch 1, **dadurch gekennzeichnet, dass** die Abstreifeinrichtung aus wenigstens einer umlaufenden Platte (45) mit rechteckförmigen Ausnehmungen (46) besteht, wobei die Außenkanten (47) der Platte (45) den Bereichen (42) mit kleinerem Durchmesser der Walze (41) gegenüberliegend angeordnet sind.

6. Rundballenpresse nach einem der vorhergehenden Ansprüche, **dadurch gekennzeichnet, dass** die Abstreifeinrichtung (23,44,49) eine wenigstens gleichhohe Umfangsgeschwindigkeit wie die Walze (22,22a,43,48) aufweist.

7. Rundballenpresse nach einem oder mehreren der vorhergehenden Ansprüche, **dadurch gekennzeichnet, dass** die Walzen (22,23,43,44,48,49) aus einem Stahlrohr mit darauf angeordneten Büchsen zur Durchmesservergrößerung bestehen.

8. Rundballenpresse nach einem oder mehreren der vorhergehenden Ansprüche, **dadurch gekennzeichnet, dass** die Abstreifeinrichtung (23,44,49) und die Walze (22,22a,43,48) in gleicher Drehrichtung umlaufen.

9. Rundballenpresse nach einem oder mehreren der vorhergehenden Ansprüche, **dadurch gekennzeichnet, dass** sich die Umlaufbahnen der Außenkanten der Walze (22,22a,43,48) und der Außenkanten der Abstreifeinrichtung (23,44,49) überschneiden.

10. Rundballenpresse nach einem oder mehreren der vorhergehenden Ansprüche, **dadurch gekennzeichnet, dass** der Antrieb der Abstreifeinrichtung (23,44,49) direkt oder indirekt von den rotierend antreibbaren Riemen (5,5a,53,54) abgeleitet wird.

## Claims

1. A round baler comprising a baling chamber (1) formed from a plurality of individual endless belts (5, 53) which are arranged side by side and are guided over rollers (22, 22a, 43, 48) and which rotate during the compacting process, wherein at least one of the rollers (22, 22a, 43, 48) has a larger diameter in its region guiding the centre region of the belts (5, 53) than between the lateral edges of adjacent belts, **characterised in that** a rotating stripper (23, 44, 49) is associated with the at least one roller (22, 22a, 43, 48) and has a larger cross-sectional dimension in the region between the lateral edges of adjacent belts (5, 5a, 53, 54) than in the centre region of the belts (5, 5a, 53, 54).

2. A round baler according to claim 1, **characterised in that** the stripper is a roller (23), in the longitudinal direction of which are arranged alternate cylindrical (24) and polygonal (26) cross-sectional regions, wherein the cylindrical cross-sectional regions (24) of the roller (23) have a larger diameter than the envelope diameters of the polygonal cross-sectional regions (26), which are arranged in the centre region of the belts (5a) and lie opposite those regions of the roller (22) which have the larger diameter.

3. A round baler according to claim 1 or 2, **characterised in that** both rollers (22, 23) have alternate cylindrical (25, 24) and polygonal cross-sectional regions (27, 26), wherein a respective cylindrical cross-sectional region (25, 24) of the one roller (22, 23) co-operates with a respective polygonal cross-sectional region (27, 26) of the other roller (22, 23).

4. A round baler according to claim 1, **characterised in that** both rollers (48, 49) have alternate cylindrical cross-sectional regions with larger (48a, 52) and smaller (48b, 50) diameters, wherein in each case the regions (48a, 52) of larger diameter of the one roller (48, 49) lie opposite the regions (50, 48b) of smaller diameter of the other roller (49, 48).

5. A round baler according to claim 1, **characterised in that** the stripper comprises at least one rotating plate (45) with rectangular recesses (46), wherein the outer edges (47) of the plate (45) are arranged opposite the regions (42) of smaller diameter of the roller (41).

6. A round baler according to any one of the preceding claims, **characterised in that** the stripper (23, 44, 49) has a circumferential speed at least equally as high as that of the roller (22, 22a, 43, 48).

7. A round baler according to one or more of the preceding claims, **characterised in that** the rollers (22, 23, 43, 44, 48, 49) comprise a steel tube with sleeves arranged thereon for increasing the diameter.

8. A round baler according to one or more of the preceding claims, **characterised in that** the stripper (23, 44, 49) and the roller (22, 22a, 43, 48) rotate in the same direction.

9. A round baler according to one or more of the preceding claims, **characterised in that** the circular paths of the outer edges of the roller (22, 22a, 43, 48) and the outer edges of the stripper (23, 44, 49) overlap one another.

10. A round baler according to one or more of the preceding claims, **characterised in that** the drive for the stripper (23, 44, 49) is derived directly or indirectly from the rotatably driven belts (5, 5a, 53, 54).

## Revendications

1. Presse à balles rondes comportant une chambre de compression des balles (1) qui est formée de plusieurs courroies sans fin (5, 53) individuelles disposées les unes à côté des autres et guidées par des rouleaux (22, 22a, 43, 48), lesquelles courroies tournent pendant l'opération de compression, moyennant quoi au moins un des rouleaux (22, 22a, 43, 48) présente un diamètre plus grand dans sa zone guidant la zone centrale des courroies (5, 53) qu'entre les bords latéraux de courroies adjacentes, **caractérisée en ce que** à au moins un rouleau (22, 22a, 43, 48) est associé un dispositif racleur tournant (23, 44, 49) qui présente une dimension de section transversale plus grande dans la zone entre les bords latéraux de courroies adjacentes (5, 5a, 53, 54) que dans la zone centrale des courroies (5, 5a, 53, 54).

2. Presse à balles rondes selon la revendication 1, **caractérisée en ce que** le dispositif racleur est un rouleau (23) sur lequel sont disposées en alternance dans le sens longitudinal des zones de section transversale cylindrique (24) et polygonale (26), les zones de section transversale cylindrique (24) du rouleau (23) présentant un diamètre plus grand que le diamètre du cercle circonscrit des zones de section transversale polygonale (26) qui sont disposées dans la zone centrale des courroies (5a) et sont opposées aux zones du rouleau (22) de grand diamètre.

3. Presse à balles rondes selon la revendication 1, **caractérisée en ce que** les deux rouleaux (22, 23) présentent en alternance des zones de section transversale cylindrique 25, 24) et polygonale 27, 26), chaque zone de section transversale cylindrique (25, 24) d'un des rouleaux (22, 23) coopérant avec la zone de section transversale polygonale (27, 26) de l'autre rouleau (22, 23).

4. Presse à balles rondes selon la revendication 1, **caractérisée en ce que** les deux rouleaux (48, 49) présentent en alternance des zones de section transversale cylindrique de grand diamètre (48a, 52) et de petit diamètre (48b, 50), chaque zone de grand diamètre (48a, 52) d'un rouleau (48, 49) étant opposée à chaque zone de petit diamètre 50, 48b) de l'autre rouleau (49, 48).

5. Presse à balles rondes selon la revendication 1, **caractérisée en ce** le dispositif racleur est constitué d'au moins une plaque en rotation (45) comportant des évidements carrés (46), les bords extérieurs (47) de la plaque (45) étant disposés pour être opposés aux zones de petit diamètre (42) du rouleau (41).

6. Presse à balles rondes selon une des revendications précédentes, **caractérisée en ce que** le dispositif racleur (23, 44, 49) présente une vitesse périphérique au moins égale à celle du rouleau (22, 22a, 43, 48).

7. Presse à balles rondes selon une des revendications précédentes, **caractérisée en ce que** les rouleaux (22, 23, 43, 44, 48, 49) sont constitués d'un tube d'acier sur lequel sont disposées des douilles pour en agrandir le diamètre.

8. Presse à balles rondes selon une des revendications précédentes, **caractérisée en ce que** le dispositif racleur (23, 44, 49) et le rouleau (22, 22a, 43, 48) tournent dans le même sens.

9. Presse à balles rondes selon une des revendications précédentes, **caractérisée en ce que** les trajectoires de rotation des bords extérieurs du rouleau (22, 22a, 43, 48) et des bords extérieurs du dispositif racleur (23, 44, 49) se recoupent.

10. Presse à balles rondes selon une des revendications précédentes, **caractérisée en ce que** l'entraînement du dispositif racleur (23, 44, 49) est produit directement ou indirectement par les courroies (5, 5a, 53, 54) pouvant être entraînées en rotation.
